(19)

Europäisches Patentamt

European Patent Office

Office européen des brevets

(11) **EP 4 011 618 A1**

(12) **EUROPEAN PATENT APPLICATION**

(43) Date of publication:
**15.06.2022  Bulletin 2022/24**

(21) Application number: **20213136.3**

(22) Date of filing: **10.12.2020**

(51) International Patent Classification (IPC):
**B32B 27/08** (2006.01)    **B32B 27/32** (2006.01)

(52) Cooperative Patent Classification (CPC):
**B32B 27/08; B32B 27/32; B32B 27/327;**
B32B 2250/03; B32B 2250/242; B32B 2270/00;
B32B 2307/30; B32B 2307/31; B32B 2307/406;
B32B 2307/412; B32B 2307/51; B32B 2307/54;
B32B 2307/5825; B32B 2307/72; B32B 2307/7244;
(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Abu Dhabi Polymers Co. Ltd (Borouge) LLC
Abu Dhabi (AE)**
• **Borealis AG
1020 Vienna (AT)**

(72) Inventors:
• **DAS, Subrata Kumar
Abu Dhabi (AE)**
• **AL TALAFHA, Mohammad
Abu Dhabi (AE)**
• **SINGH, Raghvendra
Abu Dhabi (AE)**
• **MALMROS, Peter
Abu Dhabi (AE)**

(74) Representative: **Kador & Partner PartG mbB
Corneliusstraße 15
80469 München (DE)**

(54) **LAYERED POLYETHYLENE FILM FOR PACKAGING MATERIAL**

(57)     The invention relates to a polyethylene multilayered film comprising an inner layer I, an outer layer O and a core layer C between the inner and the outer layer, wherein inner layer I comprises component AI which is a linear low density ethylene polymer, and wherein core layer C comprises a component AC which is a high density polyethylene having a density of 950 to 970 kg/m$^3$ and a MFR$_2$ of 0.2 to 2.0 g/10 min, and wherein outer layer O comprises a component AO which is a linear low density ethylene polymer, and wherein the film is having seal initiation temperature at 5N of 102°C to 120°C measured according to ASTM F 2029 and ASTM F 88, and wherein the film is having a gloss value of at least 90, when gloss is measured at 60° according to ISO 2813, and wherein the film has a tensile modulus (1% secant modulus) in machine direction (MD) of 500 MPa to 700 MPa when measured as per ASTM D882

The invention further relates to a laminate comprising this film. The invention further relates to the use of the laminate and/or the film for packaging of an article.

Figure 5:

(52) Cooperative Patent Classification (CPC): (Cont.)
B32B 2307/7246; B32B 2307/732; B32B 2307/75;
B32B 2439/70; B32B 2439/80; B32B 2553/00

**Description**

The present invention relates to a polyethylene multilayered film comprising an inner layer I, an outer layer O and a core layer C between the inner and the outer layer. Furthermore, the invention relates to a laminate comprising the film, and to the use of said laminate or film.

Laminate films comprising a sealant and a print or external layer are widely used as flexible packaging materials. Package aesthetics (e.g. high gloss, transparency, and/or decorative printing) plays an important role in order to increase impact on the consumer and, hence, glossy films are used as external layers for commonly used packages. Currently, most laminates for flexible packaging materials are made using a polyethylene (PE) sealant film laminated to a film made of other material like polyethylene terephthalate (PET), (bi-axially oriented) polypropylene and/or aluminium foil and/or polyamides (Nylon) as an external layer for printing. The choice of the print layer material(s) depend(s), at least in part, on the functional requirements (e.g. thermal stability, barrier performance, aesthetics and/or stiffness) of the end use.

Providing a film capable of being used as an external layer printable substrate using only polyethylene resin would be desirable for sustainability purposes. However, films comprising only polyethylenes have several drawbacks including lack of desirable stiffness, heat resistance, optical properties required for the end applications.

For example, compared to other substrates like PET, polyamides, or BOPP, polyethylene film has comparatively inferior stiffness and common polyethylene films are not suitable for printing operation, due to their inability to match critical requirements in high speed machines, specifically rotogravure printing. If a film lacks stiffness, it will cause problems in the lamination process, e.g. because it is too soft to adhere successfully to a substrate or too delicate to be handled in the printing machines. Furthermore, heat resistance of the film also plays an important role while running on high speed printing machines and subsequent form, fill and seal machines. Currently, majority of LLDPE films have heat seal initiation temperature at 5 N (SIT) in the range of 91 to 101 °C which are widely used in flexible packaging both in surface and core layers. It is quite challenging to increase the heat resistance of PE surface layer (i.e. to obtain higher seal initiation temperature) while maintaining good optical properties (i.e. high gloss and acceptable transparency/haze).

WO 2018/187438 describes a laminate structure for packaging comprising a sealant film and a layered print film with a thickness from 15 to 30 microns. The middle layer of print film comprises at least 90% by weight high density polyethylene (HDPE) having a density from 0.950 to 0.965 g/cc and a melt index (12) from 0.1 to 20 g/10 min, and both the inner and outer layer comprise linear low density polyethylene (LLDPE) having a density from 0.925 to 0.965 g/cc. No details on the SIT, optical properties and mechanical properties of the print film have been disclosed in this publication; rather those of the laminated film have been disclosed.

It would be highly desirable and hence is the object of the invention to provide a multilayered film which fulfils the above requirements, especially a multilayered film which is based on polyethylene and which has a combination of properties like good optics (high gloss and transparency) along with higher heat resistance (high seal initiation temperature) and, simultaneously, sufficient film stiffness along with good barrier properties.

The present invention is based on the finding that such a multilayered film based on polyethylene which can be used as a packaging material can be provided by a film comprising a core layer, an internal layer and an outer layer which comprise specifically selected high density polyethylenes in the core layer and specifically selected ethylene polymers in the inner layer and outer layer.

Therefore, the present invention provides a polyethylene multilayer film comprising an inner layer I, an outer layer O and a core layer C between the inner and the outer layer, wherein

- inner layer I comprises component AI which is a linear low density ethylene polymer, and wherein

- core layer C comprises a component AC which is a high density polyethylene having a density of 950 to 970 kg/m$^3$ and a MFR$_2$ of 0.2 to 2.0 g/10 min measured according to ISO 1133, and wherein

- outer layer O comprises a component AO which is a linear low density ethylene polymer, and wherein

the film is having heat seal initiation temperature at 5N of 102°C to 120°C measured according to ASTM F 2029 and ASTM F 88, and wherein the film is having a gloss value of at least 90, when gloss is measured at 60° according to ISO 2813, and wherein the film has a tensile modulus (1% secant modulus) in machine direction (MD) of 500 to 700 MPa when measured as per ASTM D882.

The invention further provides a laminate comprising the film.

The laminate or the film can be used for packaging of an article.

The combination of the core layer C, inner layer I and outer layer O of the polyethylene multilayered films of the present invention solves the above objects. In particular, the layered films of the invention have good mechanical properties such as high stiffness expressed by their very good tensile modulus which is a mandatory requirement for high speed printable films. Particularly, the films are expected to withstand high winding tensions during printing operations such as the for example during the high speed rotogravure printing process. The films of the instant invention thus enable the production of printed films using high speed printing processes.

On the other hand, the films show improved barrier properties such as improved moisture barrier. Furthermore, the inventive films have higher heat resistance and particularly exhibit superior seal initiation temperatures. At the same time, the films show good optical properties such as excellent gloss and acceptable haze. Thus, the polyethylene multilayer films of the invention provide a balance of very good optical properties (high gloss and acceptable haze), superior heat resistance (good seal initiation temperature) and sufficient film stiffness along with improved barrier properties. These properties make them particularly suitable for subsequent use as printable films in different applications used in the packaging industry.

In the present invention the polyethylene multilayer film comprises, or consists of, an inner layer I, an outer layer O and a core layer C between the inner and the outer layer.

The core layer C of the film comprises components which particularly contribute to stiffness of the film necessary for film extrusion processes and further for printing operations. The inner layer I and outer layer O comprises components which contribute to heat resistance and optical properties of the film. The outer layer O is preferably the layer which may be printed. The inner layer I may be disposed between the core layer C and a sealant film for example in a laminate.

In the following, preferred embodiments of the high density polyethylene (HDPE) component AC comprised in the core layer C are described.

HDPEs are well known in the art and are usually produced in polymerization processes using a catalyst.

Polyethylenes generally can be unimodal or multimodal, for example bimodal. By the "modality" of a polymer is meant the structure of the molecular weight distribution of the polymer, i.e. the appearance of the curve indicating the number of molecules as a function of the molecular weight. If the curve exhibits one maximum, the polymer is referred to as "unimodal", whereas if the curve exhibits a very broad maximum or two or more maxima and the polymer consists of two or more fractions, the polymer is referred to as "bimodal", "multimodal" etc. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In the production of unimodal polyethylene, an ethylene polymer is produced in a reactor under certain conditions with respect to monomer composition, hydrogen gas pressure, temperature, pressure, and so forth. As comonomer, use is commonly made of other olefins having up to 12 carbon atoms, such as alpha-olefins having 3-12 carbon atoms, e.g. propene, 1-butene, 4-methyl-1-pentene, 1-hexene, 1-octene, 1-decene, etc., in the copolymerisation of ethylene.

In the production of for example a bimodal polyethylene, a first ethylene polymer is produced in a first reactor under certain conditions with respect to monomer composition, hydrogen gas pressure, temperature, pressure, and so forth. After the polymerisation in the first reactor, the reaction mixture including the polymer produced is fed to a second reactor, where further polymerisation takes place under other conditions. Usually, a first polymer of high melt flow rate (low molecular weight) and with a moderate or small addition of comonomer, or no such addition at all, is produced in the first reactor, whereas a second polymer of low melt flow rate (high molecular weight) and with a greater addition of comonomer is produced in the second reactor. The resulting end product consists of an intimate mixture of the polymers from the two reactors, the different molecular weight distribution curves of these polymers together forming a molecular weight distribution curve having a broad maximum or two maxima, i.e. the end product is a bimodal polymer mixture.

The HDPE of component AC preferably is a multimodal HDPE, more preferably bimodal HDPE. The HDPE of component AC preferably has a density of 955 to 968 $kg/m^3$, more preferably of 958 to 965 $kg/m^3$. Such multimodal HDPE and their production are, for example, described in WO 2020/109289, p. 19 to 28 to which it is referred.

Preferably, the HDPE is a copolymer. An ethylene copolymer is a polymer which comprises ethylene monomer and one or more comonomer(s). The comonomer can be alpha-olefins having 4 to 12 carbon atoms, e.g. 1-butene, 4-methyl-1-pentene, 1-hexene, 1-octene, 1-decene. More preferably, the HDPE is a copolymer of ethylene and 1-butene, 1-hexene or 1-octene, most preferred is 1-butene.

Preferably, the total amount of comonomers present in the HDPE is of 0.0 to 0.40 mol%, more preferably of 0.01 to 0.30 mol%, and most preferably 0.02 to 0.20 mol%.

Preferably, the HDPE of component AC has a $MFR_2$ of 0.25 to 1.8 g/10min, more preferably of 0.3 to 1.5 g/10min, still more preferably 0.4 to 1 g/10 min, and most preferably 0.5 to 0.9 g/10min.

In a particularly preferred embodiment, the HDPE of component AC has a $MFR_2$ of 0.5 to 0.9 g/10 min, and/or an $MFR_5$ of 2.0 to 3.5 g/10 min and/or a $MFR_{21}$ of 30 to 50 g/10 min, and/or a density of 958 to 965 $kg/m^3$, and/or a molecular weight distribution (MWD) of 10 to 15, and/or a $M_n$ of 7 to 12 kg/mol, and/or a $M_w$ of 100 to 165 kg/mol, and/or a $MFR_{21}/MFR_2$ ratio ($FRR_{21/2}$) of 50 to 75 and/or a $MFR_{21}/MFR_5$ ratio ($FRR_{21/5}$) of 10 to 25.

For all polymers described herein all molecular weight parameters are measured by GPC conventional method as further described in detail below. Comonomer content is measured by NMR spectroscopy as further described in detail below.

As HDPE of component AC, resin Borstar FB5600 as produced by Borouge may be used.

In the film of the invention the inner layer I comprises component AI which is a linear low density ethylene polymer (LLDPE).

In the following, preferred embodiments of the LLDPE of component AI comprised in the inner layer I are described.

LLDPEs are well known in the art and are usually produced in polymerization processes using a catalyst.

Preferably, in the film of the invention the LLDPE of component AI is a multimodal LLDPE.

Preferably, in the film of the invention the LLDPE of component AI is a multimodal ethylene copolymer.

In the following, preferred embodiments of the multimodal ethylene copolymer of component AI are described.

Preferably, the multimodal ethylene copolymer of component AI is an ethylene copolymer having a density of $910 \text{ kg/m}^3$ to $925 \text{ kg/m}^3$ and a $MFR_2$ of 0.5 to 2.0 g/10 min.

Preferably, the multimodal copolymer comprises, or consists of, a multimodal polymer of ethylene with one or more comonomers selected from alpha-olefins having from 4 to 10 carbon atoms, which has a ratio $MFR_{21}/MFR_2$ of 13 to 30 and a MWD of 6 or less.

Such multimodal ethylene copolymers are disclosed, for example, in WO 2016/083208.

The multimodal ethylene copolymer preferably has a $MFR_2$ in the range of from 0.6 to 2.5 g/10min, and particularly preferred from 1.2 to 1.8 g/10min.

Preferably, the multimodal ethylene copolymer has a density of 910 to 925 $\text{kg/m}^3$, more preferably of 913 to 922 $\text{kg/m}^3$, and particularly preferred of 915 to 920 $\text{kg/m}^3$.

The multimodal ethylene copolymer preferably has a ratio $MFR_{21}/MFR_2$ of 13 to 30, more preferably of 15 to 25.

The multimodal ethylene copolymer preferably has an MWD of 6 or less and usually more than 1, more preferably of 3.0 to 5.0.

The alpha-olefin comonomers having from 4 to 10 carbon atoms of the multimodal ethylene copolymer are preferably 1-butene and/or 1-hexene.

Preferably, the total amount of comonomers present in the multimodal ethylene copolymer is of 0.5 to 10 mol%, preferably of 1.0 to 8 mol%, more preferably of 1.0 to 5 mol%, more preferably of 1.5 to 5.0 mol% and most preferably 2.5 to 4.0 mol%.

In a particularly preferred embodiment, multimodal copolymer is a bimodal copolymer, i.e. comprises a low molecular weight and a high molecular weight component, and has a $MFR_2$ of 1.2 to 1.8 g/10 min, and/or an $MFR_5$ of 3.0 to 5.0 g/10 min and/or a $MFR_{21}$ of 20 to 40 g/10 min, and/or a density of 915 to 920 $\text{kg/m}^3$, and/or a molecular weight distribution (MWD) of 3.0 to 5.0, and/or a $M_n$ of 15 to 25 kg/mol, and/or a $M_w$ of 80 to 115 kg/mol, and/or a $MFR_{21}/MFR_2$ ratio (FRR21/2) of 15 to 25 and/or a $MFR_{21}/MFR_5$ ratio ($FRR_{21/5}$) of 6 to 9.

In the film of the invention the LLDPE of component AI comprised in inner layer I preferably is an ethylene terpolymer, more preferably a multimodal ethylene terpolymer.

In the following, preferred embodiments of the multimodal ethylene terpolymer of component AI are described.

Preferably, the multimodal ethylene terpolymer of component AI is an ethylene terpolymer having a density of $910 \text{ kg/m}^3$ to $925 \text{ kg/m}^3$ and a $MFR_2$ of 0.5 to 2.0 g/10 min.

The multimodal ethylene terpolymer of component AI preferably comprises, or consists of, a multimodal polymer of ethylene with at least two different comonomers selected from alpha-olefins having from 4 to 10 carbon atoms, which has a ratio $MFR_{21}/MFR_2$ of 13 to 30 and a MWD of 5 or less.

Such multimodal ethylene terpolymers are disclosed, for example, in WO 2016/083208. As far as definitions (such as for the "modality" of a polymer) and production methods for these ethylene terpolymers are concerned it is referred to WO 2016/083208. Furthermore, all embodiments and preferred embodiments of such ethylene terpolymers as described in WO 2016/083208 which have a density in the range a density of 910 to 925 $\text{kg/m}^3$ are also preferred embodiments of the multimodal ethylene terpolymer of component AI in the present application, whether or not explicitly described herein.

The multimodal ethylene terpolymer preferably has a $MFR_2$ in the range of from 0.6 to 2.5 g/10min, and particularly preferred from 1.2 to 1.8 g/10min.

Preferably, multimodal ethylene terpolymer has a density of 910 to 925 $\text{kg/m}^3$, more preferably of 913 to 922 $\text{kg/m}^3$, and particularly preferred of 915 to 920 $\text{kg/m}^3$.

Multimodal ethylene terpolymer preferably has a ratio $MFR_{21}/MFR_2$ of 13 to 30, more preferably of 15 to 25.

The at least two alpha-olefin comonomers having from 4 to 10 carbon atoms of multimodal ethylene terpolymer are preferably 1-butene and 1-hexene.

Preferably, the total amount of comonomers present in the multimodal ethylene terpolymer is of 0.5 to 10 mol%, preferably of 1.0 to 8 mol%, more preferably of 1.0 to 5 mol%, more preferably of 1.5 to 5.0 mol% and most preferably 2.5 to 4.0 mol%.

Multimodal ethylene terpolymer, which preferably is a bimodal terpolymer, preferably comprises, or consists of, an ethylene polymer component (A) and an ethylene polymer component (B), wherein the ethylene polymer component (A) has higher $MFR_2$ than ethylene polymer component (B).

More preferably, the ethylene polymer component (A) has $MFR_2$ of 1 to 50 g/10 min, preferably of 1 to 40 g/10 min, more preferably of 1 to 30 g/10 min, more preferably of 2 to 20 g/10 min, more preferably of 2 to 15 g/10 min, and even more preferably of 2 to 10 g/10 min.

The ratio of the $MFR_2$ of ethylene polymer component (A) to the $MFR_2$ of the ethylene polymer component (B) is 2 to 50, preferably 5 to 40, more preferably 10 to 30, more preferably 10 to 25, and still more preferably 11 to 25.

Preferably, ethylene polymer component (A) comprises a different comonomer than the ethylene polymer (B).

Preferably, ethylene polymer component (A) has lower amount (mol%) of comonomer than ethylene polymer component (B), more preferably, the ratio of [the amount (mol%) of alpha-olefin comonomer having from 4 to 10 carbon atoms comonomer present in ethylene polymer component (A)] to [the amount (mol%) of at least two alpha-olefin comonomers having from 4 to 10 carbon atoms of the final multimodal ethylene terpolymer] is of 0.10 to 0.60, preferably of 0.15 to 0.50.

Preferably, the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

Preferably, ethylene polymer component (A) has different, preferably higher, density than the density of the ethylene polymer component (B).

The density of the ethylene polymer component (A) is preferably 925 to 950 $kg/m^3$, more preferably 930 to 945 $kg/m^3$.

Preferably, the multimodal ethylene terpolymer comprises the ethylene polymer component (A) in an amount of 30 to 70 wt.%, preferably of 40 to 60 wt.%, more preferably of 35 to 50 wt.%, more preferably 40 to 50 wt.% and the ethylene polymer component (B) in an amount of 70 to 30 wt.%, preferably of 60 to 40 wt.%, more preferably of 50 to 65 wt.%, more preferably 50 to 60 wt.%, based on the total amount (100 wt.%) of the multimodal ethylene terpolymer.

Most preferably, multimodal ethylene terpolymer consists of the ethylene polymer components (A) and (B) as the sole polymer components. Accordingly, the split between ethylene polymer component (A) to ethylene polymer component (B) is of (30 to 70):(70 to 30) preferably of (40 to 60):(60 to 40), more preferably of (35 to 50):(65 to 50), more preferably of (40 to 50):(50 to 60).

In a particularly preferred embodiment, multimodal terpolymer is a bimodal terpolymer, i.e. comprises a low molecular weight and a high molecular weight component, and has a $MFR_2$ of 1.2 to 1.8 g/10 min, and/or an $MFR_5$ of 3.0 to 5.0 g/10 min and/or a $MFR_{21}$ of 20 to 40 g/10 min, and/or a density of 915 to 920 $kg/m^3$, and/or a molecular weight distribution (MWD) of 3.0 to 5.0, and/or a $M_n$ of 15 to 25 kg/mol, and/or a $M_w$ of 80 to 115 kg/mol, and/or a $MFR_{21}/MFR_2$ ratio (FRR21/2) of 15 to 25 and/or a $MFR_{21}/MFR_5$ ratio ($FRR_{21/5}$) of 6 to 9.

Preferred as multimodal ethylene terpolymers are also such commercially available as Anteo™ from Borealis or Borouge having the properties as required herein, especially Anteo™ FK1828 or Anteo™ FK1820. Most preferred is Anteo™ FK1828 for component AI.

In the film according to the invention the outer layer O comprises component AO which is a linear low density ethylene polymer (LLDPE).

Preferably, in the film of the invention the LLDPE of component AO comprised in the outer layer O is an ethylene copolymer, more preferably an ethylene terpolymer, more preferably a multimodal ethylene copolymer or terpolymer.

Preferably, the LLDPE of component AO comprised in the outer layer O is selected from any of the embodiments described herein for the multimodal ethylene copolymer or multimodal ethylene terpolymer component AI. The selected embodiment may also be the same for AI and AO.

Preferably, the LLDPE of component AO is an ethylene copolymer having a density of 910 $kg/m^3$ to 925 $kg/m^3$ and a $MFR_2$ of 0.5 to 2.0 g/10 min, more preferably a multimodal ethylene copolymer having a density of 910 $kg/m^3$ to 925 $kg/m^3$ and a $MFR_2$ of 0.5 to 2.0 g/10 min.

Preferably, the LLDPE of component AO is an ethylene terpolymer having a density of 910 $kg/m^3$ to 925 $kg/m^3$ and a $MFR_2$ of 0.5 to 2.0 g/10 min, more preferably a multimodal ethylene terpolymer having a density of 910 $kg/m^3$ to 925 $kg/m^3$ and a $MFR_2$ of 0.5 to 2.0 g/10 min.

Preferably, in the film of the invention the inner layer I further comprises component BI wherein BI is one of BI1 or BI2, wherein BI1 is a linear low to medium density polyethylene having a density which is higher than that of component AI. Preferably, BI1 has a density of between 915 $kg/m^3$ to 945 $kg/m^3$ and a $MFR_2$ of 0.05 to 1.0 g/10 min. Preferably, BI2 is a high density polyethylene having a density of 950 to 970 $kg/m^3$ and a $MFR_2$ of 0.2 to 2.0 g/10 min.

In the following, preferred embodiments of the linear low to medium density polyethylene components BI1 present in the inner layer I are described.

Component BI1 may be a linear medium density polyethylene (MDPE) with a density of 925 to 945 $kg/m^3$. Such MDPEs are also well known in the art and are usually produced in polymerization processes using a catalyst. The MDPE of component BI1 preferably is a multimodal MDPE, more preferably bimodal MDPE. Such multimodal MDPE and their production are, for example, described in WO 2017/021389 A1, p. 8 to 10 to which it is referred.

The MDPE of component BI1 preferably has a density of 930 to 940 kg/m$^3$, more preferably of 932 to 938 kg/m$^3$.

Preferably, the MDPE of component BI1 is an ethylene copolymer. The comonomer can be alpha-olefins having 4 to 12 carbon atoms, e.g. 1-butene, 4-methyl-1-pentene, 1-hexene, 1-octene, 1-decene. More preferably, the MDPE is a copolymer of ethylene and 1-butene or 1-hexene, most preferred is 1-butene.

Preferably, the total amount of comonomers present in the MDPE of component BI1 is of 1.0 to 4.0 mol%, more preferably of 1.5 to 3.5 mol%, and most preferably 2.0 to 3.2 mol%.

Preferably, the MDPE of component BI1 has a MFR$_2$ of 0.06 to 0.35 g/10min, more preferably of 0.08 to 0.30 g/10min, and most preferably 0.10 to 0.20 g/10min.

In a particularly preferred embodiment, the MDPE of component BI1 has a MFR$_2$ of 0.10 to 0.20 g/10 min, and/or an MFR$_5$ of 0.40 to 0.80 g/10 min and/or a MFR$_{21}$ of 10 to 20 g/10 min, and/or a density of 932 to 938 kg/m$^3$, and/or a molecular weight distribution (MWD) of 15 to 35, and/or a M$_n$ of 8 to 12 kg/mol, and/or a M$_w$ of 150 to 280 kg/mol, and/or a MFR$_{21}$/MFR$_2$ ratio (FRR$_{21/2}$) of 80 to 150 and/or a MFR$_{21}$/MFR$_5$ ratio (FRR$_{21/5}$) of 20 to 30.

As MDPE of component B11, resin Borstar FB1350 as produced by Borealis or Borouge may be used.

Component BI1 may be a linear low density polyethylene (LLDPE) with a density of 915 to 930 kg/m$^3$. Such LLDPEs are also well known in the art and are usually produced in polymerization processes using a catalyst. The LLDPE of component BI1 preferably is a multimodal LLDPE, more preferably bimodal LLDPE. Such multimodal LLDPE and their production are, for example, described in WO 2004/000933 A1, p. 9 to 12 to which it is referred.

The LLDPE of component BI1 preferably has a density of 918 to 928 kg/m$^3$, more preferably of 920 to 925 kg/m$^3$.

Preferably, the LLDPE of component BI1 is an ethylene copolymer. The comonomer can be alpha-olefins having 4 to 12 carbon atoms, e.g. 1-butene, 4-methyl-1-pentene, 1-hexene, 1-octene, 1-decene. More preferably, the LLDPE is a copolymer of ethylene and 1-butene or 1-hexene, most preferred is 1-butene.

Preferably, the total amount of comonomers present in the LLDPE of component BI1 is of 2.0 to 6.0 mol%, more preferably of 2.5 to 5.5 mol%, and most preferably 3.0 to 5.2 mol%.

Preferably, the LLDPE of component BI1 has a MFR$_2$ of 0.1 to 0.45 g/10min, more preferably of 0.15 to 0.4 g/10min, and most preferably 0.20 to 0.30 g/10min.

In a particularly preferred embodiment, the LLDPE of component BI1 has a MFR$_2$ of 0.20 to 0.30 g/10 min, and/or an MFR$_5$ of 0.80 to 1.2 g/10 min and/or a MFR$_{21}$ of 18 to 26 g/10 min, and/or a density of 920 to 925 kg/m$^3$, and/or a molecular weight distribution (MWD) of 10 to 20, and/or a M$_n$ of 10 to 15 kg/mol, and/or a M$_w$ of 150 to 250 kg/mol, and/or a MFR$_{21}$/MFR$_2$ ratio (FRR$_{21/2}$) of 80 to 110 and/or a MFR$_{21}$/MFR$_5$ ratio (FRR$_{21/5}$) of 18 to 26.

As LLDPE of component B11, resin Borstar FB2230 as produced by Borealis or Borouge may be used.

Preferably, the high density polyethylene component BI2 comprised in the inner layer I is selected from any of the embodiments described herein for the high density polyethylene component AC. The selected embodiment may also be the same for AC and BI2.

Incorporation of a component BI and specifically a MDPE as described for BI1 or a HDPE as described for BI2 contributes to improving the heat resistance of the inner layer of the film.

Preferably, in the film of the invention component BI is a MDPE as described for BI1 or a HDPE as described for B12.

Preferably, in the film of the invention component BI2 and/or AC has/have a density of 955 to 965 kg/m$^3$ and/or a MFR$_2$ of 0.4 to 1.5 g/10 min. More, preferably, in the film of the invention component BI2 and/or AC has/have a density of 958 to 965 kg/m$^3$ and/or a MFR$_2$ of 0.5 to 0.9 g/10 min.

Preferably, in the film of the invention component AC is present in core layer C in an amount of up to 90 wt.%, more preferably of up to 85 wt.%.

Preferably, in the film of the invention component AC is present in core layer C in an amount of 30 wt.% or more, more preferably of 40 wt.% or more, still more preferably of 50 wt.% or more and most preferably of 60 wt.% or more.

Preferably, in the film of the invention core layer C further comprises a component BC which is a LLDPE, more preferably an ethylene copolymer having a density of 910 kg/m$^3$ to 925 kg/m$^3$ and a MFR$_2$ of 0.5 to 2.0 g/10 min, still more preferably an ethylene terpolymer having a density of 910 kg/m$^3$ to 925 kg/m$^3$ and a MFR$_2$ of 0.5 to 2.0 g/10 min, still more preferably a multimodal ethylene copolymer or terpolymer.

Preferably, in the film of the invention component BC is present in core layer C in an amount of 10 to 40 wt.%, more preferably, in an amount of 12 to 30 wt.%, most preferably, in an amount of 15 to 25 wt.%.

Preferably, in the film of the invention core layer C comprises, more preferably consists of a component AC and a component BC.

Preferably, in the film of the invention core layer C has a total density of 940 kg/m$^3$ to 965 kg/m$^3$, more preferably of 945 kg/m$^3$ to 963 kg/m$^3$ and most preferably of 948 kg/m$^3$ to 960 kg/m$^3$.

Preferably, the multimodal ethylene copolymer, preferably terpolymer of component BC as used in the core layer C is selected from any of the embodiments described herein for multimodal ethylene copolymer or multimodal terpolymer component AI.

Preferably, in the film of the invention component AI and/or AO and/or BC has/have a density of 910 kg/m$^3$ to 920 kg/m$^3$ and a MFR$_2$ of 1.0 to 2.0 g/10 min. More preferably AI and/or AO and/or BC has/have a density of 915 kg/m$^3$ to 920 kg/m$^3$ and a MFR$_2$ of 1.2 to 1.8 g/10 min.

Preferably, in the film of the invention the outer layer O comprises a component BO which is a linear low density polyethylene having a density of 915 kg/m$^3$ to 930 kg/m$^3$ and a MFR$_2$ of 0.05 to 1.0 g/10 min.

Preferably, the linear low density polyethylene of component BO as used in the outer layer O is selected from any of the embodiments described herein for linear low density polyethylene component B11. The selected embodiment may also be the same for BO and BI1.

Preferably, in the film of the invention the inner layer I comprises a component CI and/or outer layer O comprises a component CO which is a LDPE having a density of 918 kg/m$^3$ to 928 kg/m$^3$.

Accordingly, in the film of the invention inner layer I preferably comprises, or more preferably consists of a component AI, a component BI and a component CI and the outer layer O preferably comprises or more preferably consists of a component AO, a component BO and a component CO.

In the following, preferred embodiments of the LDPEs of component CI and/or CO are described. The LDPEs may be selected from anyone of these embodiments independently for component CI and/or component CO. The selected embodiment may also be the same for CI and CO.

LDPEs are well known in the art and are produced in high pressure process usually performed in a tubular reactor or an autoclave.

LDPEs and their production are, for example, described in WO 2017/055174, page 9, line 29 to page 12, line 6, to which it is referred.

The LDPE of component CI and/or CO preferably has a density of 918 to 928 kg/m$^3$, more preferably of 919 to 927 kg/m$^3$, and most preferably of 921 to 925 kg/m$^3$.

Preferably, the LDPE of component CI and/or CO has a MFR$_2$ of 1.2 to 3.3 g/10min, more preferably of 1.4 to 3.0 g/10min, and most preferably of 1.6 to 2.4 g/10min.

In a particularly preferred embodiment, the LDPE of component CI and/or CO has a MFR$_2$ of 1.6 to 2.40, and/or a density of 921 to 925 kg/m$^3$, and/or a MWD of 5.5 to 9, and/or M$_n$ of 12 to 18 kg/mol, and/or a M$_w$ of 80 to 130 kg/mol.

As LDPE of component AC, resin FT6236 as produced by Borealis or Borouge may be used.

Preferably, for the films of the invention inner layer I and/or outer layer O have a density of not lower than 910 kg/m$^3$, more preferably equal to or higher than 915 kg/m$^3$.

Preferably, for the films of the invention the density of outer layer O is 910 to 925 kg/m$^3$, more preferably 915 to 924 kg/m$^3$, and most preferably 918 to 923 kg/m$^3$

Preferably, for the films of the invention the inner layer I has a density similar to layer O or higher than layer O. More preferably, the inner layer I has a density of 910 to 945 kg/m$^3$, more preferably 915 to 943 kg/m$^3$, most preferably 920 to 940 kg/m$^3$.

Preferably, in the film of the invention component AI and/or AO is/are present in the respective layer(s) in an amount of 45 to 75 wt.%, more preferably, in an amount of 50 to 70 wt.%, most preferably, in an amount of 55 to 65 wt.%.

Preferably, in the film of the invention component BI and/or BO is/are present in the respective layer(s) in an amount of 20 to 40 wt.%, more preferably, in an amount of 22 to 38 wt.%, most preferably, in an amount of 25 to 35 wt.%.

Preferably, in the film of the invention component CI and/or CO is/are present in the respective layer(s) in an amount of 5 to 20 wt.%, more preferably, in an amount of 6 to 18 wt.%, most preferably, in an amount of 8 to 15 wt.%.

The film of the invention has improved mechanical properties. Accordingly, the film of the invention has a tensile modulus (1% secant modulus) in machine direction (MD) of at least 500 MPa when measured as per ASTM D882, preferably 510 MPa to 700 MPa, more preferably 520 MPa to 650 MPa.

Furthermore, the film of the invention preferably has a tensile modulus (1% secant modulus) in transverse direction (TD) of at least 600 MPa when measured as per ASTM D882 more preferably 620 MPa to 1000 MPa, most preferably 650 MPa to 900 MPa.

Furthermore, the film of the invention preferably has a tensile stress at break in machine direction (MD) of at least 40.0 MPa when measured as per ISO 527-3, more preferably 44.0 MPa to 70.0 MPa, most preferably 45.5 MPa to 60.0 MPa.

Furthermore, the film of the invention preferably has a tensile stress at break in transverse direction (TD) of at least 30.0 MPa when measured as per ISO 527-3, more preferably 31.0 MPa to 60.0 MPa, most preferably 32.0 MPa to 50.0 MPa.

Furthermore, the film of the invention preferably has an elongation at break in machine direction (MD) of at least 300%, when measured as per ISO 527-3, more preferably 350 % to 800 %, most preferably 400% to 700%.

Furthermore, the film of the invention preferably has an elongation at break in transverse direction (TD) of at least 400%, when measured as per ISO 527-3, more preferably 450 % to 1000 %, most preferably 500% to 900%.

Furthermore, the film of the invention preferably has a tensile stress at yield in machine direction (MD) of at least 14.0 MPa when measured as per ISO 527-3, more preferably 15.0 MPa to 40.0 MPa, most preferably 16.0 MPa to 30.0 MPa.

Furthermore, the film of the invention preferably has a tensile stress at yield in transverse direction (TD) of at least 14.0 MPa when measured as per ISO 527-3, more preferably 16.0 MPa to 40.0 MPa, most preferably 18.0 MPa to 30.0 MPa.

Furthermore, the film of the invention preferably has a tear strength (Elmendorf) in machine direction (MD) of at least 0.1 N when measured as per ASTM D 1922, more preferably 0.15 N to 1.0 N, most preferably 0.2 N to 0.9 N.

Furthermore, the film of the invention preferably has a tear strength (Elmendorf) in transverse direction (TD) of at least 7.0 N when measured as per ASTM D1922, more preferably 7.5 N to 20.0 N, most preferably 8.0 N to 18.0 N.

Furthermore, the film of the invention preferably has a dart drop impact of at least 20 g when measured as per ASTM D1709 "method A", more preferably 25 g to 100 g, most preferably 30 g to 90 g.

The films having such tensile properties may withstand the high winding tension during print applications. Particularly, films having such tensile properties allow printing operations on high speed printing machines.

Preferably, the films of the invention enable very good printing on rotogravure printing and/or flexographic printing machines.

The film of the invention has heat seal initiation temperature at 5N (SIT) of 102° C to 120°C measured according to ASTM F 2029 and ASTM F 88, preferably of from 103 to 118°C, more preferably of from 104°C to 116°C, most preferably of from 105°C to 115°C. Higher seal initiation temperature indicates improved operability in the subsequent steps during running on other machines and excellent heat resistance of the film.

Preferably, the film of the invention has a haze value which is less than 12% measured according to ASTM D1003, more preferably of from 11% to 3%, most preferably of from 10% to 5%. The haze is a measure for the transparency of the film and the values indicates good transparency.

The film according the invention has a gloss value of at least 90, when gloss is measured at 60° according to ISO 2813, more preferably of from 92 to 135, most preferably of from 95 to 130. The film thus has also good optical properties for both inner layer I and/or outer layer O.

Preferably, layer O of the film according the invention has a gloss value of at least 90, when gloss is measured at 60° according to ISO 2813, more preferably of from 95 to 140, most preferably of from 100 to 135.

Preferably, layer I of the film according the invention has a gloss value of at least 90, when gloss is measured at 60° according to ISO 2813, more preferably of from 92 to 135, most preferably of from 95 to 130.

Preferably, the film of the invention has a thickness of 20 to 35 micrometer, more preferably of from 21 to 33 micrometer, most preferably of from 22 to 30 micrometer.

Core layer C in the film of the invention preferably has a thickness of 25 to 75% of the total film thickness, more preferably 30 to 70% of the total film thickness, and most preferably 40 to 60 % of the total film thickness. Layers I and/or O has/have each preferably a thickness of 5 to 35% of the total film thickness, and most preferably 15 to 30 % of the total film thickness.

The film according to the invention may consist of an inner layer I, an outer layer O and a core layer C between the inner and the outer layer, but the film may also further comprise one or more further layers.

Particularly, it may also further comprise one or more intermediate layer(s) X between core layer C and, inner layer I, and outer layer O for example in a five layer film O/X1/C/X2/I.

If present, intermediate layer(s) X preferably comprise, or consists of, a composition similar to the composition of its next layer which may thus be a composition of core layer C or either of a composition of the next inner layer I or the next outer layer O.

If more than one intermediate layer X is present it may be made of the same or different material.

Preferably, the film of the invention comprises up to five layers.

Preferably, the film comprises only layers consisting of ethylene polymers.

The present invention also relates to a process for producing a layered film, wherein the layers of the film are co-extruded.

The different polymer components in any of layers of the film are typically intimately mixed prior to layer formation, for example using a twin screw extruder, preferably a counter-rotating extruder or a co-rotating extruder. Then, the blends are converted into a coextruded film.

Preferably, the film of the invention can be produced by blown film or cast film process.

In order to manufacture such multilayer films according to the invention, for example normally at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.

The blown (co-)extrusion can be effected at a temperature in the range 150°C to 240°C, more preferably 160 °C to 230°C and cooled by blowing gas (generally air) at a temperature of 10 to 40°C, more preferably 12 to 14 °C to provide a frost line height of 0.5 to 4 times, more preferably 1 to 2 times the diameter of the die.

The blow up ratio (BUR) should generally be in the range of 1.5 to 3.5, preferably 2.0 to 3.0, more preferably 2.1 to 2.8.

The layered film of the invention may also have been subjected to a stretching step, wherein the film after its production is stretched in the machine direction (MDO). Stretching may be carried out by any conventional technique using any conventional stretching devices which are well known to those skilled in the art.

The film of the invention has also improved moisture barrier performance. Preferably, the film of the invention has a moisture transmission rate of not greater than 12.0 g/m$^2$/day, measured according to ASTM F-1249, 37.8 °C, 90% humidity, more preferably 3.0 to 12.0 g/m$^2$/day, most preferably 4.0 to 11.0 g/m$^2$/day.

Preferably, the film of the invention has oxygen transmission rate of not greater than 5000 cm$^3$/m$^2$/day, measured according to ASTM D3985, 23 °C, 0% relative humidity, more preferably 1000 to 5000 cm$^3$/m$^2$/day, more preferably 2000 to 4500 cm$^3$/m$^2$/day.

The invention further relates to a laminate comprising the film according to the invention. For example, the film may be laminated to a sealant film and thus the laminate comprises or preferably consists of the film of the invention and a sealant film. Preferably, the sealant film comprises an ethylene polymer. Preferably, the sealant film comprises only layers consisting of ethylene polymers. More, preferably, the sealant film and the polyethylene multilayered film according to the invention comprise only layers consisting of ethylene polymer. Thus, preferably the laminate is a monomaterial laminate consisting of ethylene polymers.

The invention further relates to the use of a laminate according to the invention and/or a film according to the invention for packaging of an article. Particularly, they may be used in form, fill and seal packaging technology or in the formation of pouches, such as stand up pouches, sacks, bags, sachets or lamitubes.

Any one of the embodiments of the invention described herein can be combined with one or more of these embodiments. Particularly, any embodiment described for the film of the invention is applicable to the laminate and to the use of the film or the laminate.

In the following, the invention will further be illustrated by way of examples which refer to the figures which show:

Figure 1: PE film structure

Figure 2: Tensile strength and Tensile modulus (1% secant) both in MD (machine direction) and TD (transverse direction)

Figure 3: Haze (%) of the film samples

Figure 4: Gloss@60° of the film samples (on layer I)

Figure 5: Seal initiation temperature (SIT) of the film samples

Figure 6: Barrier properties of the film samples

**Measurement and Determination Methods**

**a)** Measurement of melt flow rate MFR

The melt flow rate (MFR) is determined according to ISO 1133 and is indicated in g/10 min. The higher the melt flow rate, the lower the viscosity of the polymer. The MFR is determined at 190 °C for polyethylene and at a loading of 2.16 kg (MFR$_2$), 5.00 kg (MFRs) or 21.6 kg (MFR$_{21}$).

The quantity FRR (flow rate ratio) is an indication of molecular weight distribution and denotes the ratio of flow rates at different loadings. Thus, FRR$_{21/5}$ denotes the value of MFR$_{21}$/MFR$_5$.

**b)** Density

Density of the polymer was measured according to ISO 1183-1:2004 (method A) on compression moulded specimen prepared according to EN ISO 1872-2 (Feb 2007) and is given in kg/m$^3$.

**c)** GPC

*1) GPC conventional method*

Molecular weight averages (M$_z$, M$_w$ and M$_n$), molecular weight distribution (MWD) and its broadness, described by polydispersity index, PDI= M$_w$/M$_n$ (wherein M$_n$ is the number average molecular weight and M$_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \, x \, M_i)}{\sum_{i=1}^{N} A_i} \quad (2)$$

$$M_z = \frac{\sum_{i=1}^{N} (A_i \, x \, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As mobile phase 1,2,4-trichlorobenzene (TCB) stabilized with 250 mg/L 2,6-Di tert butyl-4-methylphenol) was used. The chromatographic system was operated at column temperature of 160 °C and detector at 160 °C and at a constant flow rate of 1 mL/min. 200 µL of sample solution was injected per analysis. Data collection was performed using either Agilent Cirrus software version 3.3 or PolymerChar GPC-IR control software.

The column set was calibrated using 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \; x \; 10^{-3} \; mL/g, \quad \alpha_{PS} = 0.655$$

$$K_{PE} = 39 \; x \; 10^{-3} \; mL/g, \quad \alpha_{PE} = 0.725$$

A third order polynomial fit was used to fit the calibration data.

All samples were prepared in the concentration range of around 1 mg/ml and dissolved at 160 °C for 3 (three) hours for PE in fresh distilled TCB stabilized with 250 ppm Irgafos168 under continuous gentle shaking

*(2) GPC viscosity method*

Molecular weight averages ($M_z$, $M_w$ and $M_n$), Molecular weight distribution (MWD) of LDPE is measured by GPC-viscosity method using universal calibration. Molecular weight averages ($M_w$, $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-4 2019. A PL 220 (Polymer Laboratories) GPC equipped with an IR4 infrared detector, an online four capillary bridge viscometer (PL-BV 400-HT) was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 µL of sample solution were injected per analysis. The corresponding detector constant of the viscometer as well as the inter-detector delay volumes were determined with a narrow PS standard (MWD = 1.01) with a molar mass of 132900 g/mol and an intrinsic viscosity of 0.4789 dl/g. The detector constant of the IR4 detector was determined using NIST1475a with dn/dc of 0.094 cm³/g.

The column set was calibrated using universal calibration (according to ISO 16014-2:2019) with at least 15 narrow MWD polystyrene (PS) standards in the range of 0.5 kg/mol to 11 600 kg/mol. The corresponded intrinsic viscosities of the PS standards were calculated from their corresponding concentration (IR4), online viscometer signals, and determined detector constants for polystyrene. For low molecular weight PS with a molar mass below 3000 g/mol the initial weight out concentration is used, due to end group effects in the IR detector.

The molecular weight of the sample ($M_2$) at each chromatographic slice using the universal calibration approach can be calculated by following correlation:

$$logM_1[\eta_1] = V_R = logM_2[\eta_2]$$

with: $M_1$ Molar mass of PS
$\eta_1$ intrinsic viscosity of the PS
$M_2$ Molar mass of sample
$\eta_2$ intrinsic viscosity of sample
$V_R$ Retention volume

All data processing and calculation was performed using the Cirrus Multi-Offline SEC-Software Version 3.2 (Polymer Laboratories a Varian inc. Company).
All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking.

d) Comonomer content

Quantification of microstructure by NMR spectroscopy

Quantitative nuclear-magnetic resonance (NMR) spectroscopy was used to quantify the comonomer content of the polymers.
Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. {klimke06, parkinson07, castignolles09} Standard single -pulse excitation was employed utilising the NOE at short recycle delays {pollard04, klimke06} and the RS-HEPT decoupling scheme {fillip05, griffin07} . A total of 1024 (1k) transients were acquired per spectra.
Quantitative $^{13}C\{^1H\}$ NMR spectra were processed, integrated and relevant quantitative properties determined from the integrals. All chemical shifts are internally referenced to the bulk methylene signal ($\delta+$) at 30.00 ppm.
The amount of ethylene was quantified using the integral of the methylene ($\delta+$) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3^*B + 2^*H) / 2$$

where B and H are defined for their respective comonomers. Correction for consecutive and non-consecutive commoner incorporation, when present, is undertaken in a similar way.
Characteristic signals corresponding to the incorporation of 1 -butene were observed and the comonomer fraction calculated as the fraction of 1 -butene in the polymer with respect to all monomer in the polymer:

$$fBtotal = (Btotal / (Etotal + Btotal + Htotal)$$

The amount isolated 1 -butene incorporated in EEBEE sequences was quantified using the integral of the $_*B2$ sites at 38.3 ppm accounting for the number of reporting sites per comonomer:

$$B = I_{*B2}$$

The amount consecutively incorporated 1 -butene in EEBBEE sequences was quantified using the integral of the $\alpha\alpha$B2B2 site at 39.4 ppm accounting for the number of reporting sites per comonomer:

$$BB = 2 * I\alpha\alpha B2B2$$

The amount non consecutively incorporated 1 -butene in EEBEBEE sequences was quantified using the integral of the $\beta\beta$B2B2 site at 24.7 ppm accounting for the number of reporting sites per comonomer:

$$BEB = 2 * I\beta\beta B2B2$$

Due to the overlap of the *B2 and *$\beta$B2B2 sites of isolated (EEBEE) and non-consecutivly incorporated (EEBEBEE) 1-butene respectively the total amount of isolated 1-butene incorporation is corrected based on the amount of non-consecutive 1 -butene present:

$$B = I_{*B2} - 2 * I\beta\beta B2B2$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1 -hexene were observed and the comonomer fraction calculated as the fraction of 1 -hexene in the polymer with respect to all monomer in the polymer:

$$fHtotal = (Htotal / (Etotal + Btotal + Htotal)$$

The amount isolated 1 -hexene incorporated in EEHEE sequences was quantified using the integral of the $_{*}$B4 sites at 39.9 ppm accounting for the number of reporting sites per comonomer:

$$H = I_{*B4}$$

The amount consecutively incorporated 1 -hexene in EEHHEE sequences was quantified using the integral of the $\alpha\alpha$B4B4 site at 40.5 ppm accounting for the number of reporting sites per comonomer:

$$HH = 2 * I\alpha\alpha B4B4$$

The amount non consecutively incorporated 1 -hexene in EEHEHEE sequences was quantified using the integral of the $\beta\beta$B4B4 site at 24.7 ppm accounting for the number of reporting sites per comonomer:

$$HEH = 2 * I\beta\beta B4B4$$

The total mole fraction of 1 -hexene in the polymer was then calculated as:

$$fH = (Htotal / (Etotal + Btotal + Htotal)$$

The mole percent comonomer incorporation is calculated from the mole fraction:

$$B \ [mol\%] = 100 \ ^* \ fB$$

$$H \ [mol\%] = 100 \ ^* \ fH$$

The weight percent comonomer incorporation is calculated from the mole fraction:

$$B \ [wt\%] = 100 \ ^* \ ( \ fB \ ^* \ 56.11) \ / \ ( \ (fB \ ^* \ 56.11) + (fH \ ^*84.16) + ((1-(fB + fH)) \ ^* \ 28.05) \ )$$

$$H \ [wt\%] = 100 \ ^* \ ( \ fH \ ^* \ 84.16 \ ) \ / \ ( \ (fB \ ^* \ 56.11) + (fH \ ^* \ 84.16) + ((1-(fB + fH)) \ ^* \ 28.05) \ )$$

References:

klimke06

Klimke, K., Parkinson, M., Piel, C, Kaminsky, W., Spiess, H.W., Wilhelm, M., Macromol. Chem. Phys. 2006;207:382.

parkinson07

Parkinson, M., Klimke, K., Spiess, H.W., Wilhelm, M., Macromol. Chem. Phys. 2007;208:2128.

pollard04

Pollard, M., Klimke, K., Graf, R., Spiess, H.W., Wilhelm, M., Sperber, O., Piel, C, Kaminsky, W., Macromolecules 2004;37:813.

filip05

Filip, X., Tripon, C, Filip, C, J. Mag. Resn. 2005, 176, 239

griffin07

Griffin, J.M., Tripon, C, Samoson, A., Filip, C, and Brown, S.P., Mag. Res. in Chem. 2007 45, S1, S198

castignolles09

Castignolles, P., Graf, R., Parkinson, M., Wilhelm, M., Gaborieau, M., Polymer 50 (2009) 2373

busico01

Busico, V., Cipullo, R., Prog. Polym. Sci. 26 (2001) 443

busico97

Busico, V., Cipullo, R., Monaco, G., Vacatello, M., Segre, A.L., Macromoleucles 30 (1997) 6251

zhou07

Zhou, Z., Kuemmerle, R., Qiu, X., Redwine, D., Cong, R., Taha, A., Baugh, D. Winniford, B., J. Mag. Reson. 187 (2007) 225

busico07

Busico, V., Carbonniere, P., Cipullo, R., Pellecchia, R., Severn, J., Talarico, G., Macromol. Rapid Commun. 2007, 28, 1128

Resconi00

Resconi, L., Cavallo, L., Fait, A., Piemontesi, F., Chem. Rev. 2000, 100, 1253

**e)** Mechanical Properties

<u>Tensile modulus and Tensile stress at break</u>

Film tensile properties are measured at 23°C according to ISO 527-3 with a specimen Type 2 using 25 micrometer thick blown film. Tensile modulus in machine direction (MD) and Tensile modulus in transverse direction (TD) were measured as 1% secant modulus with 5mm/min test speed and 50mm gauge length according to ASTM D882.

Tensile stress at break were measured according to ISO 527-3 specimen Type 2 with 50mm gauge length and 500 mm/min test speed. The film samples were produced as described below under "Examples".

<u>Elongation at break</u>

Film TD (transversal direction) and MD (machine direction). Elongation at break in machine and transverse direction were determined according to ISO 527-3 on films with thickness of 25 micrometer produced as described below under "Examples".

<u>Tensile stress at yield</u>

Film TD (transversal direction) and MD (machine direction). Tensile stress at yield in machine and transverse direction were determined according to ISO 527-3 on films with thickness of 25 micrometer produced as described below under "Examples".

<u>Tear strength (Elmendorf)</u>

Film TD (transversal direction) and MD (machine direction). Tear strength in machine and transverse direction were determined according to ASTM D1922 on films with thickness of 25 micrometer produced as described below under "Examples".

<u>Dart drop impact</u>

Dart drop impact was determined according to ASTM D1709 "method "A" on films with thickness of 25 micrometer produced as described below under "Examples".

**f)** Optical Properties

Gloss, clarity and haze as measures for the optical appearance of the films were determined according to ISO 2813 (gloss) and ASTM D1003 (haze and clarity) on films with thickness of 25 micrometer produced as described below under "Examples".

Gloss of layer O and layer I was determined according to ISO 2813 at an angle of 60°. As per ISO 2813, three measurement angles (20°, 60°, and 85°) can be done by BYK-Gardner Micro-TRI-Gloss Meter and gloss values of 60° is recorded and reported as gloss units (GU). Accordingly, gloss is measured on both surfaces of the film and measured separately. Gloss of inner film layer (I) means gloss measured "on the film surface of inner side of film" (inner film surface), and similarly gloss of outer film layer (O) means gloss measured "on the film surface of outer side of film" (outer film surface).

**g)** Seal initiation temperature (SIT)

In principle, heat seal is formed by bonding two films (polymeric) in the way that surfaces are pressed together into a close contact while being at least in partially molten. This test method also covers the evaluation part after the heat seal process is performed. The force required to separate a test strip of material containing the seal is measured using UTM (also to identifies the mode of specimen failure). Following the ASTM F 2029; ASTM F 88 standard, a tested specimen with a film thickness of 25 mircometer produced as described below under "Examples" where the sealed surfaces are selected. For testing, a minimum of five specimens shall be used for each seal temperature. The term "seal initiation temperature" (SIT) is specified as the "heat seal initiation temperature at 5 N" refers to the temperature at which a seal is formed that will have a strength of 5 N after cooling. The temperature at which a heat seal forms immediately after the sealing operation (sealing time 1.0 seconds, sealing pressure 3 bar), the strength of the heat seal being measured at a specified time interval (at least 24 hrs after completion of the sealing cycle and after the seal has cooled to ambient temperature and reached maximum strength).

**h)** Moisture vapour transmission rate

Moisture vapour transmission rate of the films with thickness of 25 micrometer produced as described below under "Examples" was determined according to ASTM F-1249 standard. The water vapor transmission rate (WVTR) test is performed as per ASTM F1249:2006 and/or ISO15106-2:2003, at 37.8 °C at 90% relative humidity (RH).

**i)** Oxygen Transmission Rate (OTR)

Oxygen barrier property, i.e. oxygen transmission rate, is determined on blown films having a thickness of 25 $\mu$m. The specimen is mounted as a sealed semi-barrier between two chambers at ambient atmospheric pressure. One chamber is slowly purged by a stream of nitrogen and hydrogen gas mixture (2% $H_2$ in $N_2$) at a given temperature and relative humidity and the other chamber is purged by a stream of oxygen at the same temperature and relative humidity as the $N_2$ stream. As oxygen gas permeates through the film into the nitrogen carrier gas, it is transported to the coulometric detector where it produces an electrical current, the magnitude of which is proportional to the amount of oxygen flowing into the detector per unit time. The oxygen transmission rate test (OTR) is performed as per ASTM D 3985, at 23 °C and 0% relative humidity, with using 10 sccm of $N_2/H_2$ and $O_2$ (99.999%) gases and a film surface area of 1 cm$^2$.

**Examples**

Layered films consisting of core layer C, inner layer I and outer layer O were produced. Three layered films IE1 to IE3 are according to the invention and two are comparative CE1 and CE2. The inventive multilayer film properties were evaluated on large scale blown film equipment (Polyrema machinery) in comparison to reference comparative examples. The inventive films were very easy to process and exhibited good bubble stability.

The performance of the produced films were analysed on 25 micrometer thick blown films produced at the process operating conditions as detailed below in table 3 with die-gap of 1.8 mm, lower neck-height and blow up ratio of 2.5:1.

The polymers used for making the layered films of the invention and of the comparative examples are given in Table 1 below.

Table 1:

| Resin name | Producer | Type | MFR$_2$ (g/10min) | Density (kg/m$^3$) | Slip & antiblock additives |
|---|---|---|---|---|---|
| Anteo FK1820 | Borouge | Bimodal 1-butene,1-hexene ethylene terpolymer | 1.5 | 918 | No |
| Anteo FK1828 | Borouge | Bimodal 1-butene,1-hexene ethylene terpolymer | 1.5 | 918 | 1 000ppm Slip additive; 2500ppm Antiblock additive |
| Borstar FB1350 | Borealis | Bimodal MDPE | 0.15 | 935 | No |

(continued)

| Resin name | Producer | Type | MFR$_2$ (g/ 10min) | Density (kg/m$^3$) | Slip & antiblock additives |
|---|---|---|---|---|---|
| Borstar FB2230 | Borealis | Bimodal LLDPE | 0.25 | 923 | No |
| Borstar FB5600 | Borouge | Bimodal 1-butene ethylene copolymer | 0.7 | 960 | No |
| FT6236 | Borealis | Tubular LDPE | 2.0 | 923 | 550ppm Slip additive; 800ppm Antiblock additive |
| FT6230 | Borealis | Tubular LDPE | 2.0 | 923 | No |
| Sabic 118W | Saudi Basic Industries Corporation (SABIC) | Uni-modal LLDPE: 1-butene ethylene copolymer | 1.0 | 918 | 1500ppm Slip additive; 3500ppm Antiblock additive |
| Exceed 1018KB | ExxonMobil | Unimodal LLDPE: 1-hexene ethylene copolymer | 1.0 | 918 | 800 ppm slip additive; 2500 ppm antiblock additive |

The CEs and IE are as follows:

- **CE1:** Market reference film recipe, produced from Exxon Mobil Exceed 1018KB and Sabic 118W with small amount of LDPE.

- **CE2:** Market reference film recipe, produced from Anteo FK1828 and Borstar FB2230 with regular LLDPE Sabic 118W used in the market.

- **IE1, IE2, IE3:** Inventive film samples, produced by using Borstar® polyethylene FB1350 or FB2230 and FB5600 along with bimodal terpolymer Anteo FK1828/FK1820 products.

The composition details and structure of the layered films of CE1, CE2 and IE1 to IE3 produced are given in Table 2. All the polyethylene films were produced with a thickness of 25 micrometer. For all inventive examples IE 1 to IE3 and comparative examples CE1 and CE2 the thickness of the core layer C is 50% of the total thickness of the film and the thickness of each of the inner layer and outer layer is 25% of the total thickness of the film. In Table 2 "I" means inner layer, "O" means outer layer and "C" means core layer.

Table 2:

| Example | Layer structure | O Composition: polymers/ amount wt.% | | O Density kg/m$^3$ | C Composition: polymers/ amount wt.% | | C Density kg/m$^3$ | I Composition: Polymers/ amount wt.% | | I Density kg/m$^3$ |
|---------|-----------------|------------------|------|------|------------------|------|--------|------------------|------|--------|
| IE1 | O/C/I | FK1820 FB2230 FT6236 | 60 30 10 | 920 | FB5600 FK1828 | 80 20 | 951 | FK1828 FB2230 FT6236 | 60 30 10 | 920 |
| IE2 | O/C/I | FK1820 FB2230 FT6236 | 60 30 10 | 920 | FB5600 FK1828 | 85 15 | 953.7 | FK1828 FB1350 FT6236 | 60 30 10 | 923.6 |
| IE3 | O/C/I | FK1820 FB2230 FT6236 | 60 30 10 | 920 | FB5600 FK1828 | 85 15 | 953.7 | FK1828 FB5600 FT6236 | 60 30 10 | 931.1 |
| CE1 | O/C/I | Sabic 118W FT6230 | 80 20 | 919 | Sabic 118W FT6230 | 75 25 | 919.3 | Exceed 1018KB FT6236 | 80 20 | 919 |
| CE2 | O/C/I | Sabic 118W FT6230 | 80 20 | 919 | FB2230 FT6230 | 75 25 | 923 | FK1828 FT6236 | 80 20 | 919 |

Any polyethylene blend used in the above described layers can be produced by any suitable conventional multi-layer film extrusion line, preferably at a temperature of 150 to 240°C, more preferably at 160 to 230°C. All the polyethylene films were produced on a Polyrema (Reifenhauser multilayer blown film line with internal bubble cooling system) having an output of 150 kgs/hr and cooling air temperature were in between 12 to 14 °C. The blown film line had the following properties as listed in Table 3 as follows:

Table 3:

| Blown film line parameters | |
|---|---|
| Die diameters | 180 mm |
| Die gap | 1.8 mm |
| Blow up ratio (BUR) | 2.5 : 1 |
| Bubble cooling | IBC |
| Cooling air temperature | 14 °C |
| Corona treatment | 44 dynes |

The temperature profile of the blown film line i.e., the temperatures (°C) used for different locations of the blown film lines are as follows:

Table 4

| Layer | Extruder zone 1 | Extruder zone 2 | Extruder zone 3 | Extruder zone 4 | Extruder zone 5 | Post Extruder zone 6 | Post Extruder zone 7 | Post Extruder zone 8 |
|---|---|---|---|---|---|---|---|---|
| External Outer Layer | 160 | 200 | 195 | 190 | 185 | 190 | 200 | 200 |
| Core/ middle Layer | 160 | 200 | 210 | 210 | 210 | 210 | 200 | 200 |
| External Inner layer | 160 | 200 | 195 | 190 | 185 | 195 | 200 | 200 |

Table 5 lists the melt temperature profile of the blown film line for different layers of the blown film extruders and respective melt pressure. The films were produced using a slightly different process temperature in order to optimize film aesthetics (gloss and transparency/haze) and to deliver stable production.

Table 5:

| | CE1 | CE2 | IE1 | IE2 | IE3 |
|---|---|---|---|---|---|
| Outer layer extruder temperature | | | | | |
| Melt temperature (°C) | 194 | 194 | 213 | 213 | 213 |
| Melt pressure (bar) | 226 | 227 | 223 | 224 | 222 |
| Middle layer extruder temperature | | | | | |
| Melt temperature (°C) | 209 | 208 | 209 | 209 | 209 |
| Melt pressure (bar) | 251 | 299 | 263 | 265 | 262 |
| Inner layer extruder temperature | | | | | |
| Melt temperature (°C) | 202 | 202 | 211 | 211 | 210 |
| Melt pressure (bar) | 278 | 211 | 219 | 226 | 195 |
| Die temperature (°C) | 216 | 215 | 215 | 215 | 215 |

The following tests have been carried out on the layered films produced:

**Mechanical properties**

Film tensile properties and tensile modulus (1% secant)

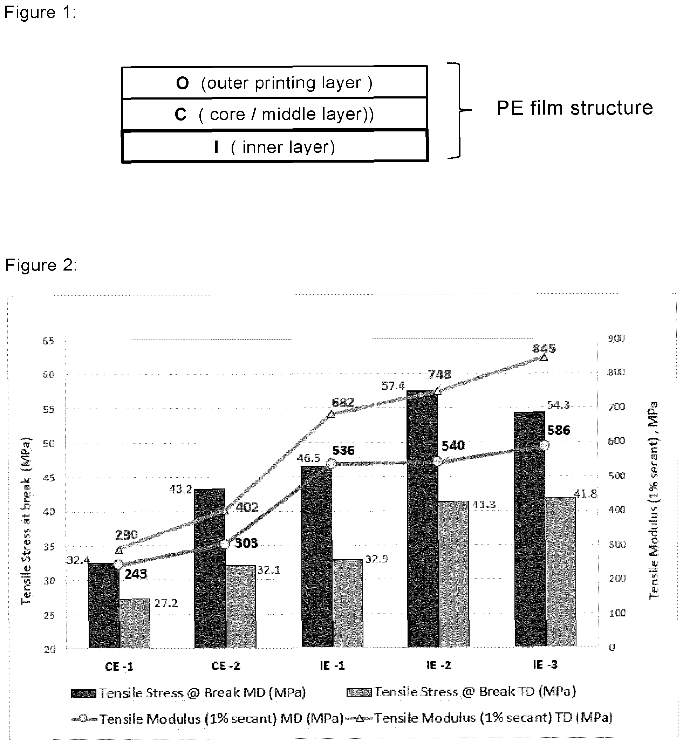

Referring to Figure 2, higher tensile modulus and tensile strength are shown for the inventive examples, which are significantly superior than the comparative examples. The films are expected to withstand the higher winding tension during the subsequent printing operation. Depending upon the each printing machine requirements (line speed of printing machine and its winding tension) - higher tensile modulus and/or higher stiffness - different PE structures can be used within the ranges described in this invention.

The combination of the Borstar FB5600 in the core layer along with Anteo FK1828 in the inner layer I and in the outer layer O exhibits sufficient stiffness and optical balance, which is beneficial for printing operations for example on high speed rotogravure printing machines.

**Optical Properties gloss and haze**

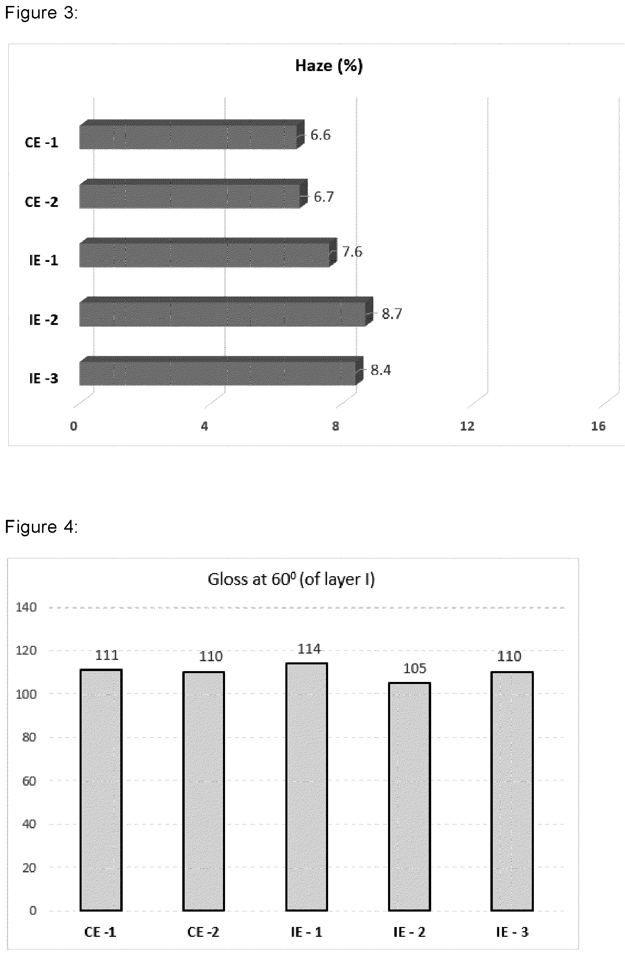

Referring to Figures 3 and 4 all inventive examples showed comparable gloss and acceptable haze or transparency when compared to comparative examples. Excellent gloss in inventive examples are obtained by balancing the higher content of Anteo FK1828 with suitable percentage of Borstar LLDPE and LDPE in the inner layer I. IE-2 and IE-3 are specifically designed for higher heat resistance requirements, where transparency is kept within acceptable limit which is achieved by using 30 to 40% of Borstar FB1350 or FB5600 in the inner layer I. The gloss of outer layer O is also very good and achieved by using more than 50% of Anteo FK1820 which has influence on the excellent surface gloss for the multilayer film.

**Heat resistance of film (Seal initiation temperature at 5N):**

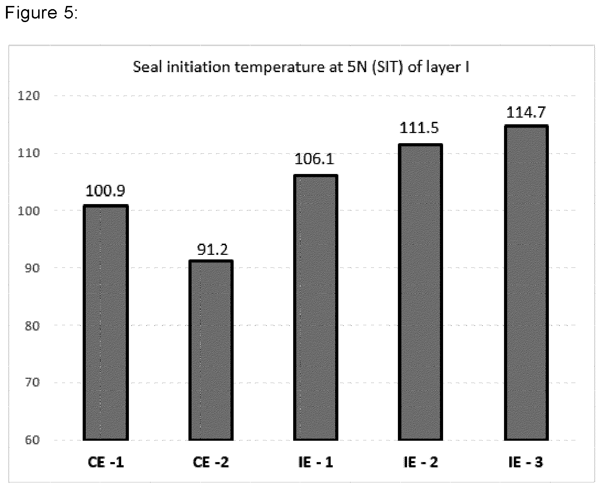

PE films are required to resist high temperatures while passing through the various subsequent operations in high speed printing and form, fill and seal machine. Referring to Figure 5, higher SIT indicates the better heat resistance of films of inventive examples IE1 to IE3. Good heat resistance is achieved while maintaining the good optical properties (high gloss and low haze). The heat resistance is further improved by incorporating Borstar FB1350 (IE2) or FB5600 (IE3) in inner layer I of the film substrate. The challenging target of good optical properties (high gloss and acceptable haze) is achieved while providing high heat resistance.

**Film barrier performance (WVTR and OTR)**

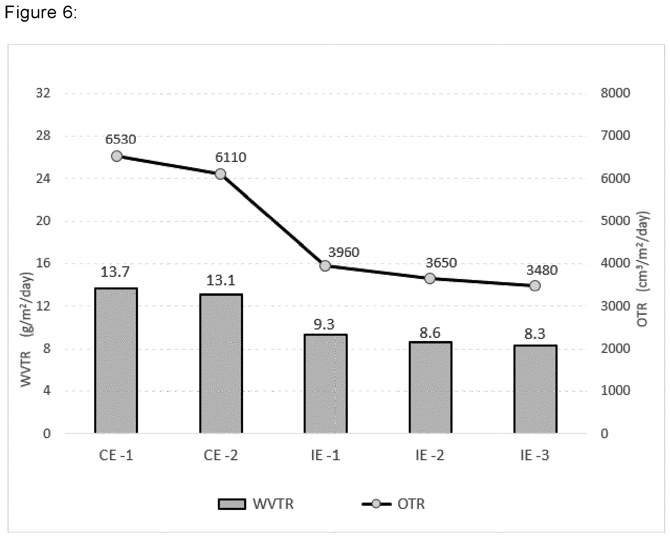

Referring to Figure 6, moisture barrier performance and oxygen barrier of inventive examples IE1 to IE3 are significantly superior than all the comparative examples. Further improvement is provided when a higher percentage of bimodal HDPE Borstar FB5600 is used in the core layer along with 30 to 40% bimodal MDPE or HDPE in the inner layer as shown by inventive examples IE2 and IE3.

Table 6 provides further film properties of both CE's and IE's.

Table 6

| Property | Unit | CE1 | CE2 | IE1 | IE2 | IE3 |
|---|---|---|---|---|---|---|
| Elongation at Break (MD) | % | 479 | 423 | 450 | 565 | 490 |
| Elongation at Break (TD) | % | 675 | 747 | 698 | 790 | 770 |
| Tensile Stress at Yield (MD) | MPa | 20.9 | 21.3 | 19.2 | 19.2 | 20.4 |
| Tensile Stress at Yield (TD) | MPa | 13.5 | 13.8 | 21.8 | 21.7 | 24.1 |
| Tear strength (Elmendorf) MD | N | <0.4 | 0.5 | 0.5 | 0.4 | 0.5 |
| Tear strength (Elmendorf) TD | N | 8.5 | 9.7 | 8.9 | 10.1 | 9.9 |
| Gloss (60°) - on layer O | GU | 115 | 116 | 112 | 111 | 113 |
| Gloss (60°) - on layer I | GU | 111 | 110 | 114 | 105 | 110 |
| Dart Drop Impact | g | 84 | 78 | 65 | 35 | 42 |

**Rotogravure printing process and performance:**

The print films were then reverse printed on a BOBST Rotomec 4003, 10-color rotogravure printing machine. Winder tension was normally operating in the range of 5 to 10 bar for $12\mu m$ PET substrate. The tension was optimized for $25\mu m$ PE films and it was managed to run/print on the same line in between a tension of 4 to 6 bar to avoid stretching of PE substrate. Other critical parameters used to run PE print films were the drying temperature at 50 °C and the unwinding tension was kept very close to the winding tension of 4 to 6 bar.

Referring to Table 7, at least good printing quality was achieved with all inventive examples IE1 to IE3, whereas CE's are not suitable because of overstretching of films. All films were reverse rotogravure printed at high speed having a line speed of 200 meters/min. All comparative examples exhibited stretching of films and distorted print registration. Inventive PE films provide the stiffness to prevent overstretching and thereby achieve the desired printing performance on the rotogravure printing.

Table 7:

| Sample | Printing observations |
|--------|----------------------|
| CE1 | Overstretching, poor print registration |
| CE2 | Stretching, distorted shape of printing |
| IE1 | Good printing quality |
| IE2 | Excellent print quality |
| IE3 | Excellent print quality |

The inventive high stiff PE multilayerd films are suitable for replacement of PET or other films and these would be utilized for mono-material PE structure, which can provide fully recyclable and sustainable packaging applications.

**Claims**

1.  A polyethylene multilayered film comprising an inner layer I, an outer layer O and a core layer C between the inner and the outer layer, wherein

    - inner layer I comprises component AI which is a linear low density ethylene polymer, and wherein
    - core layer C comprises a component AC which is a high density polyethylene having a density of 950 to 970 $kg/m^3$ and a $MFR_2$ of 0.2 to 2.0 g/10 min measured according to ISO 1133, and wherein
    - outer layer O comprises a component AO which is a linear low density ethylene polymer, and wherein

    the film is having heat seal initiation temperature at 5N of 102°C to 120°C when measured as per ASTM F 2029 and ASTM F 88, and wherein the film is having a gloss value of at least 90, when gloss is measured at 60° according to ISO 2813, and wherein the film has a tensile modulus (1% secant modulus) in machine direction (MD) of 500 to 700 MPa when measured as per ASTM D882.

2.  The film according to claim 1 wherein component AI and/or AO is/are an ethylene copolymer having a density of 910 $kg/m^3$ to 925 $kg/m^3$ and a $MFR_2$ of 0.5 to 2.0 g/10 min measured according to ISO 1133, preferably an ethylene terpolymer having a density of 910 $kg/m^3$ to 925 $kg/m^3$ and a $MFR_2$ of 0.5 to 2.0 g/10 min measured according to ISO 1133.

3.  The film according to any one of the preceding claims wherein inner layer I further comprises component BI wherein BI is one of BI1 or BI2, wherein BI1 is a linear low to medium density polyethylene having a density which is higher than that of component AI and is between 915 $kg/m^3$ to 940 $kg/m^3$ and a $MFR_2$ of 0.05 to 1.0 g/10 min measured according to ISO 1133, and BI2 is a high density polyethylene having a density of 950 to 970 $kg/m^3$ and a $MFR_2$ of 0.2 to 2.0 g/10 min measured according to ISO 1133.

4.  The film according to according to any one of the preceding claims wherein component BI2 and/or AC has/have a density of 955 to 965 $kg/m^3$ and/or a $MFR_2$ of 0.4 to 1.5 g/10 min measured according to ISO 1133.

5. The film according to any one of the preceding claims wherein component AC is present in core layer C in an amount of up to 90 wt.%, preferably in an amount of 50 to 85 wt.%.

6. The film according to any one of the preceding claims wherein core layer C further comprises a component BC which is a linear low density ethylene polymer, preferably an ethylene copolymer having a density of 910 kg/m$^3$ to 925 kg/m$^3$ and a MFR$_2$ of 0.5 to 2.0 g/10 min measured according to ISO 1133, more preferably an ethylene terpolymer having a density of 910 kg/m$^3$ to 925 kg/m$^3$ and a MFR$_2$ of 0.5 to 2.0 g/10 min measured according to ISO 1133.

7. The film according to any one of the preceding claims wherein component AI and/or AO and/or BC has/have a density of 910 kg/m$^3$ to 920 kg/m$^3$ and a MFR$_2$ of 1.0 to 2.0 g/10 min measured according to ISO 1133.

8. The film according to any one of the preceding claims wherein outer layer O comprises a component BO which is a linear low density polyethylene having a density of 915 kg/m$^3$ to 930 kg/m$^3$ and a MFR$_2$ of 0.05 to 1.0g/10 min measured according to ISO 1133.

9. The film according to any one of the preceding claims wherein inner layer I comprises a component CI and/or outer layer O comprises a component CO which is a LDPE having a density of 918 kg/m$^3$ to 928 kg/m$^3$ measured according to ISO 1133.

10. The film according to any one of the preceding claims wherein component AI and/or AO is/are present in the respective layer(s) in an amount of 45 to 75 wt.%, and/or wherein component BI and/or BO is/are present in the respective layer(s) in an amount of 20 to 40 wt.% and/or wherein component CI and/or CO is/are present in the respective layer(s) in an amount of 5 to 15 wt.%.

11. The film according to any one of the preceding claims wherein the film is having a haze value which is less than 12% when measured according to ASTM D1003.

12. The film according to any one of the preceding claims wherein the film has a thickness of 20 to 35 micrometer and/or the film comprises up to five layers and/or can be produced by blown film or cast film process.

13. The film of any one of the preceding claims, wherein the film has a moisture transmission rate of not greater than 12 g/m$^2$/day, measured according to ASTM F-1249, 37.8 °C, 90% humidity.

14. A laminate comprising the film according to any one of the preceding claims.

15. The laminate according to claim 14 further comprising a sealant film, wherein the sealant film comprises an ethylene polymer.

16. Use of a laminate according to claims 14 or 15 and/or a film according to any one of claims 1 to 13 for packaging of an article.

Figure 1:

| O (outer printing layer ) |
|---|
| C ( core / middle layer)) |
| I ( inner layer) |

PE film structure

Figure 2:

Figure 3:

**Haze (%)**

CE -1 — 6.6
CE -2 — 6.7
IE -1 — 7.6
IE -2 — 8.7
IE -3 — 8.4

0    4    8    12    16

Figure 4:

**Gloss at 60⁰ (of layer I)**

CE -1: 111
CE -2: 110
IE - 1: 114
IE - 2: 105
IE - 3: 110

Figure 5:

Seal initiation temperature at 5N (SIT) of layer I

Figure 6:

Europäisches
Patentamt

European
Patent Office

Office européen
des brevets

# EUROPEAN SEARCH REPORT

Application Number

EP 20 21 3136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2018/187438 A1 (DOW GLOBAL TECHNOLOGIES LLC [US]) 11 October 2018 (2018-10-11) * claim 1; example 1; table 1 * | 1-16 | INV. B32B27/08 B32B27/32 |
| X | WO 2012/106025 A1 (EXXONMOBIL CHEM PATENTS INC [US]; VINCK MICHAEL J [BE] ET AL.) 9 August 2012 (2012-08-09) | 1 | |
| A | * tables 1,2,3 * | 2-16 | |
| X | US 2006/188678 A1 (OHLSSON STEFAN B [BE] ET AL) 24 August 2006 (2006-08-24) * claims 1-55; example 2; tables 3,4,5 * | 1-16 | |

**TECHNICAL FIELDS SEARCHED (IPC)**

B32B

The present search report has been drawn up for all claims

| Place of search | Date of completion of the search | Examiner |
|---|---|---|
| The Hague | 12 May 2021 | Chatron-Michaud, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 3136

This annex lists the patent family members relating to the patent documents cited in  the above-mentioned European search report.
The members are as contained in the European Patent Office EDP file on
The European Patent Office is in no way liable for these particulars which are merely given for the purpose of information.

12-05-2021

| Patent document cited in search report | | Publication date | Patent family member(s) | | Publication date |
|---|---|---|---|---|---|
| WO 2018187438 | A1 | 11-10-2018 | AR | 111555 A1 | 24-07-2019 |
| | | | BR | 112019020827 A2 | 12-05-2020 |
| | | | CN | 110621501 A | 27-12-2019 |
| | | | EP | 3606749 A1 | 12-02-2020 |
| | | | JP | 2020515441 A | 28-05-2020 |
| | | | TW | 201841764 A | 01-12-2018 |
| | | | US | 2020061984 A1 | 27-02-2020 |
| | | | WO | 2018187438 A1 | 11-10-2018 |
| WO 2012106025 | A1 | 09-08-2012 | NONE | | |
| US 2006188678 | A1 | 24-08-2006 | US | 2006188678 A1 | 24-08-2006 |
| | | | WO | 2006091310 A1 | 31-08-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018187438 A
- WO 2020109289 A
- WO 2016083208 A
- WO 2017021389 A1
- WO 2004000933 A1
- WO 2017055174 A

**Non-patent literature cited in the description**

- **KLIMKE, K. ; PARKINSON, M. ; PIEL, C ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C ; KAMINSKY, W.** *Macromolecules,* 2004, vol. 37, 813
- **FILIP, X. ; TRIPON, C ; FILIP, C.** *J. Mag. Resn.,* 2005, vol. 176, 239
- **GRIFFIN, J.M. ; TRIPON, C ; SAMOSON, A. ; FILIP, C ; BROWN, S.P.** *Mag. Res. in Chem.,* 2007, vol. 45, 1-198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B., J.** *Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253